# EUROPEAN PATENT APPLICATION

(11) **EP 3 238 892 A1**
(43) Date of publication of application: **01.11.2017**
(21) Application number: 15873375.8
(22) Date of filing: 26.12.2015
(51) Int. Cl.: B25J 18/02, F16G 13/20, F16H 19/02, F16H 19/04

(54) **ROBOT ARM MECHANISM AND LINEARLY MOVING EXTENDABLE MECHANISM**

(30) Priority: 27.12.2014 JP 2014266884
(71) Applicant: Life Robotics Inc., Koto-ku Tokyo 135-0047 (JP)
(72) Inventor: YOON Woo-Keun, Tokyo 135-0047 (JP)
(74) Representative: Herrero & Asociados, S.L.
(86) International application number: PCT/JP2015/086448
(87) International publication number: WO 2016/104807

(57) **Abstract**

A purpose is to improve movement characteristics of a linear extension and retraction mechanism. A robot arm mechanism includes a rotary joint and a linear extension and retraction joint. The linear extension and retraction joint includes a plurality of first connection pieces (23) coupled together bendably on a bottom plate side and provided with a U-shaped cross section, and a plurality of second connection pieces (22) coupled together bendably and each shaped like a flat plate. A foremost one of the plurality of second connection pieces is connected with a foremost one of the plurality of first connection pieces. The first and second connection pieces, when joined together, form a columnar body by being constrained from bending. The columnar body is relaxed when the first and second connection pieces are separated from each other. An ejection section (32) forms the columnar body by joining together the first and second connection pieces and supports the columnar body. A linear gear (30) is formed on a surface of a bottom plate of each of the first connection pieces. A drive gear (29) is engaged with the linear gears of the first connection pieces joined to the second connection pieces in the ejection section.

## Description

### FIELD

Embodiments described herein relate generally to a robot arm mechanism and a linear extension and retraction mechanism.

### BACKGROUND

Vertical articulated robot arm mechanisms require three degrees of positional freedom (x, y, z) and three degrees of postural freedom (φ, θ, ψ). Because translation of hand tips requires the joints J1, J2, and J3 to rotate in coordination, movement of the joint J2 called an elbow, in particular, is very large and unpredictable, making it inevitable that the movement of the elbow becomes very fast especially around a singular point. Effective measures for securing six degrees of freedom without using an elbow joint include adoption of a linear extension and retraction mechanism. The linear extension and retraction mechanism is characterized by a wider range of linear motion than conventional linear-motion mechanisms. For commercialization of the linear extension and retraction mechanism, not only improvement of a mechanism of a linear extension and retraction portion, but also improvement of its movement characteristics are important issues.

### BRIEF DESCRIPTION OF THE INVENTION

A purpose of the present invention is to improve movement characteristics of a linear extension and retraction mechanism.

A robot arm mechanism according to an embodiment of the present invention comprises a revolute joint and a linear extension and retraction joint. The linear extension and retraction joint includes a plurality of first connection pieces coupled together bendably on a bottom plate side and provided with a U-shaped cross section, and a plurality of second connection pieces coupled together bendably and each shaped like a flat plate. A foremost one of the plurality of second connection pieces is connected with a foremost one of the plurality of first connection pieces. The first and second connection pieces, when overlapped each other, form a columnar body by being constrained from bending. The columnar body is relaxed when the first and second connection pieces are separated from each other. An ejection section forms the columnar body by joining together the first and second connection pieces and supports the columnar body. A movement section moves the first and second connection pieces in an ejection direction. A linear gear is formed on a surface of a bottom plate of each of the first connection pieces. A drive gear of the movement section is engaged with the linear gears of the first connection pieces overlapped to the second connection pieces in the ejection section.

### BRIEF DESCRIPTION OF THE VIEWS OF THE DRAWINGS

FIG. 1 is an external perspective view of the robot arm mechanism according to an embodiment of the present invention;
FIG. 2 is a diagram showing the robot arm mechanism of FIG. 1 using graphic symbol representation;
FIG. 3 is a side view showing a drive gear adapted to move an arm section of the robot arm mechanism of FIG. 1;
FIG. 4 is a perspective view of a U-shaped piece of FIG. 3;
FIG. 5 is a side view showing another example of a drive gear adapted to move the arm section of the robot arm mechanism of FIG. 1;
FIG. 6 is a side view showing still another example of a drive gear adapted to move the arm section of the robot arm mechanism of FIG. 1;
FIG. 7 is a perspective view of a U-shaped piece of FIG. 6; and
FIG. 8 is another example of the U-shaped piece of FIG. 6.

### DETAILED DESCRIPTION

A robot arm mechanism according to an embodiment of the present invention is described below with reference to the drawings.

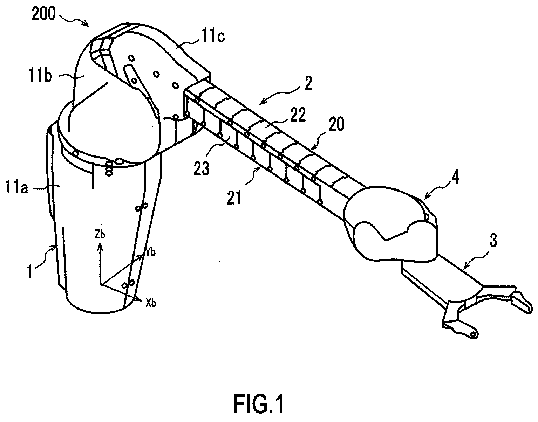

As shown in FIG. 1, a robot arm mechanism 200 is configured as a so-called vertical articulated robot arm mechanism and includes a base 1 substantially cylindrical in shape and an arm section 2 supported by the base 1. An end effector 3 is attached to a tip of the arm section 2. A hand section capable of gripping an object is shown in FIG. 1 as the end effector 3. The end effector 3 is not limited to the hand section, and may be another tool, a camera, or a display. An adaptor may be attached to the tip of the arm section 2 to allow the end effector 3 to be replaced with any type of end effector 3.

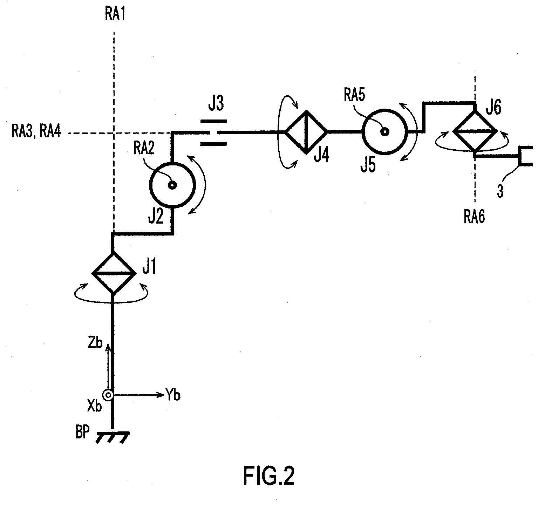

As shown in FIG. 2, the arm section 2 has a plurality of--six herein--joints J1, J2, J3, J4, J5, and J6. The plurality of joints J1, J2, J3, J4, J5, and J6 are arranged in order from the base 1. Generally, first, second, and third axes RA1, RA2, and RA3 are called root three axes, and fourth, fifth, and sixth axes RA4, RA5, and RA6 are called wrist three axes. The joints J4, J5, and J6 constituting the wrist three axes are stored in a wrist section 4. At least one of the joints J1, J2, and J3 constituting the wrist three axes is a linear motion joint. Here, the third joint J3 is a linear motion joint and is configured to be a linear extension and retraction joint with a relatively long extension and retraction distance, in particular. The first joint J1 is a torsion joint that turns on the first axis of rotation RA1 supported, for example, perpendicularly to a base plane. The second joint J2 is a bending joint that turns on the second axis of rotation RA2 perpendicular to the first axis of rotation RA1. The arm section 2 turns together with the hand section 3 in accordance with torsional rotation of the first joint J1. The arm section 2 pivots up and down on the second axis of rotation RA2 of the second joint J2 together with the hand section 3 in accordance with bending rotation of the second joint J2. The third joint J3 extends and retracts linearly along the third axis (axis of movement) RA3 perpendicular to the second axis of rotation RA2. The fourth joint J4 is a torsion joint that turns on the fourth axis of rotation RA4 which matches the third axis of movement RA3. The fifth joint J5 is a bending joint that turns on the fifth axis of rotation RA5 orthogonal to the fourth axis of rotation RA4. The sixth joint J6 is a bending joint that turns on the sixth axis of rotation RA6 orthogonal to the fourth axis of rotation RA4 and perpendicular to the fifth axis of rotation RA5.

The arm support body (first support body) 11a forming the base 1 has a cylindrical hollow structure formed around the axis of rotation RA1 of the first joint J1. When the first joint J1 rotates, the first support body 11a axially rotates in accordance with the turn of the arm section 2. Note that the first support body 11a may be fixed on a ground plane. In this case, the arm section 2 turns independently of the first support body 11a. The second support body 11b is connected to the upper part of the first support body 11a.

The second support body 11b has a hollow structure continuous with the first support body 11a. One end of the second support body 11b is attached to a rotating section of the first joint J1. The other end of the second support body 11b is open, and a third support body 11c is fitted therein vertically pivotally on the axis of rotation RA2 of the second joint J2. The third support body 11c has a scaly hollow structure communicating with the first support body 11a and the second support body 11b. In accordance with bending rotation of the second joint J2, a rear part of the third support body 11c is stored in and sent out from the second support body 11b. The rear part of the third joint J3, which constitutes a linear motion joint of the arm section 2, is stored inside the continuous hollow structure of the first support body 11a and the second support body 11b by retraction thereof.

The first joint J1 includes an annular fixed section and a rotating section, and is fixed to a base (not shown) in the fixed section. The first support body 11a and the second support body 11b are attached to the rotating section. When the first joint J1 rotates, the first support body 11a, the second support body 11b, and the third support body 11c turn around the first axis of rotation RA1 together with the arm section 2 and the hand section 3.

A lower part of a rear end of the third support body 11c is fitted in a lower part of an open end of the second support body 11b pivotally on the axis of rotation RA2. Consequently, the second joint J2 is configured as a bending joint that turns on the axis of rotation RA2. When the second joint J2 pivots, the arm section 2 pivots vertically, i.e., pivots up and down, on the axis of rotation RA2 of the second joint J2 together with the hand section 3.

As described above, the third joint J3 serving as a joint section constitutes a main constituent of the arm section 2. The hand section 3 described above is provided at the tip of the arm section 2. A two-fingered hand 16 of the hand section 3 can be moved to any given position through rotation, bending, and extension and retraction of the first to sixth joints J1 to J6. In particular, a linear extension and retraction distance of the third joint J3 enables the hand section 3 to act on an object in a wide range from a position close to the base 1 to a position far from the base 1. Because the arm section 2 of the linear extension and retraction mechanism according to the present embodiment does not have an elbow joint, motion space of the arm section 2 can be simplified to a sector shape having as its radius a maximum length of the arm section 2 attributable to linear extendibility and retractability of the linear motion joint J3.

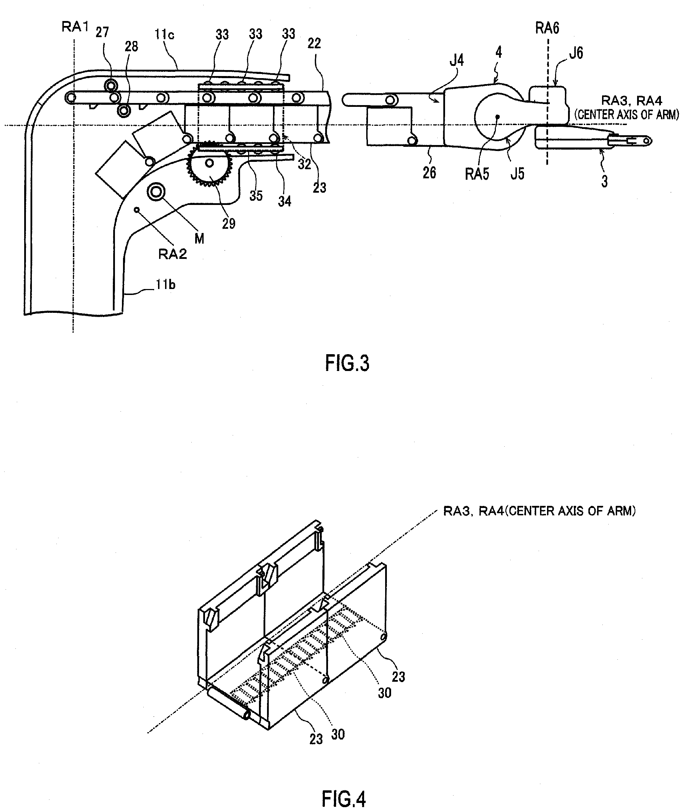

The third joint J3 is characterized by the linear extension and retraction distance realized by the linear extension and retraction mechanism constituting the third joint J3. The linear extension and retraction mechanism includes a first connection piece string 21 and a second connection piece string 20. The first connection piece string 21 is made up of a plurality of first connection pieces 23. The first connection piece 23 is configured as a short trough-like body provided with a U-shaped cross section. Each pair of successive first connection pieces 23 are coupled together at the ends of bottom plates by a pin, forming a string. Due to the cross sectional shape and coupling position of the first connection pieces 23, the first connection piece string 21 is bendable in a direction of a front surface of the bottom plate, but is unbendable in an opposite direction. The second connection piece string 20 is made up of a plurality of second connection pieces 22 each having a substantially flat plate shape and a width substantially equivalent to that of the first connection piece 23. The plurality of second connection pieces 22 are coupled together in a bendable state by pins, forming a string. The second connection piece 22 is equivalent in length to the first connection piece 23. The leading first connection piece 23 of the first connection piece string 21 and the leading second connection piece 22 of the second connection piece string 20 are connected to a head piece 26 (see FIG. 3). Upper part of the head piece 26 shaped as a rectangular parallelepiped protrudes by 1/2 the length of each of the first and second connection pieces 23 and 22 such that respective coupling positions with the overlapped first connection piece 23 and second connection piece 22 will be shifted from each other by 1/2 the length of each of the first and second connection pieces 23 and 22. When the first and second connection piece strings 21 and 20 are sent out from the third support body 11c with the head piece 26 serving as a leading piece, the first and second connection piece strings 21 and 20 are overlapped each other. When the first and second connection piece strings 21 and 20 are kept overlapped, the first connection piece string 21 and the second connection piece string 20 are constrained from bending. Consequently, a columnar body having a certain degree of rigidity is formed by the first and second connection piece strings 21 and 20. When the first connection piece string 21 and the second connection piece string 20 are separated from each other, the columnar body is relaxed, returning the first and second connection piece strings 21 and 20 to a bendable state.

As shown in FIG. 3, the first connection piece string 21 and the second connection piece string 20 are overlapped each other in the ejection section 32 mounted near an opening in the third support body 11c. The ejection section 32 is made up of a plurality of upper rollers 33 and a plurality of lower rollers 34 as well as non-illustrated side rollers, all of which are supported by a frame 35 of a rectangular tubular shape. The plurality of upper rollers 33 are arranged along a center axis of the arm at intervals substantially equivalent to the length of the second connection piece 22. Similarly, the plurality of lower rollers 34 are arranged along the center axis of the arm at intervals substantially equivalent to the length of the first connection piece 23. The second connection piece string 20 is guided, in a posture parallel to the center axis of the arm, to an ejection section 32 by a pair of guide rollers 27 and 28 placed behind the ejection section 32. The drive gear 29 is connected with a drive shaft of a motor (not shown) via a speed reducer.

The first connection piece string 21 is guided to the ejection section 32 by the guide rail (not shown) placed behind the ejection section 32. The first connection piece string 21 and the second connection piece string 20 are inserted between the upper rollers 33 and the lower rollers 34 by pressing against each other. The ejection section 32 joins together the first connection piece string 21 and the second connection piece string 20, thereby forming the columnar body and supports the columnar body from above, below, left, and right. The columnar body formed when the first connection piece string 21 and the second connection piece string 20 are overlapped each other is sent out linearly along the third axis of movement RA3.

As shown in FIG. 4, at a center of each first connection piece 23 in a width direction, a linear gear 30 is formed on the front surface of the bottom plate in parallel to the center axis of the arm. When the first connection piece string 21 and the second connection piece string 20 are overlapped each other by the ejection section 32, forming the columnar body, the linear gears 30 are lined up, forming a linear train. That portion at a rear end of a bottom plate of the ejection section 32 which corresponds to the linear gears 30 is notched at a center in the width direction and the drive gear 29 is inserted into the notched portion. The drive gear 29 is connected to a motor M via a speed reducer (not shown). The drive gear 29 is engaged with the linear gears 30 lined up forming a linear train. The drive gear 29 as a pinion makes up a rack-and-pinion mechanism in conjunction with the linear gears 30. When the motor M rotates forward, the first connection piece string 21 is sent out of the ejection section 32 together with the second connection piece string 20 as the columnar body. When the motor M rotates backward, the first connection piece string 21 is pulled back from the ejection section 32 into the support body 11b together with the second connection piece string 20 and stored. Behind the ejection section 32, the second connection piece string 20 is supported by the guide rollers 27 and 28 while the first connection piece string 21 is pulled downward, for example, by gravity, and consequently, the first connection piece string 21 is separated from the second connection piece string 20.

As described above, the linear gear 30 is formed on the bottom plate of each first connection piece 23, the first connection piece string 21 and the second connection piece string 20 are overlapped each other by the ejection section 32, forming the columnar body, the drive gear 29 is placed at a position where the linear gears 30 are lined up forming a linear train, and the drive gear 29 is engaged with the linear gears 30 at this position in the ejection section 32, thereby making it possible to most effectively implement a rack-and-pinion mechanism considered to have high utility as an existing linear-motion mechanism. That is, since the rack-and-pinion mechanism is installed in the ejection section 32 in which the columnar body is formed rather than adopting another linear-motion mechanism such as a worm gear mechanism and rather than at any other position, it is possible to improve utility of a movement mechanism in the linear extension and retraction mechanism.

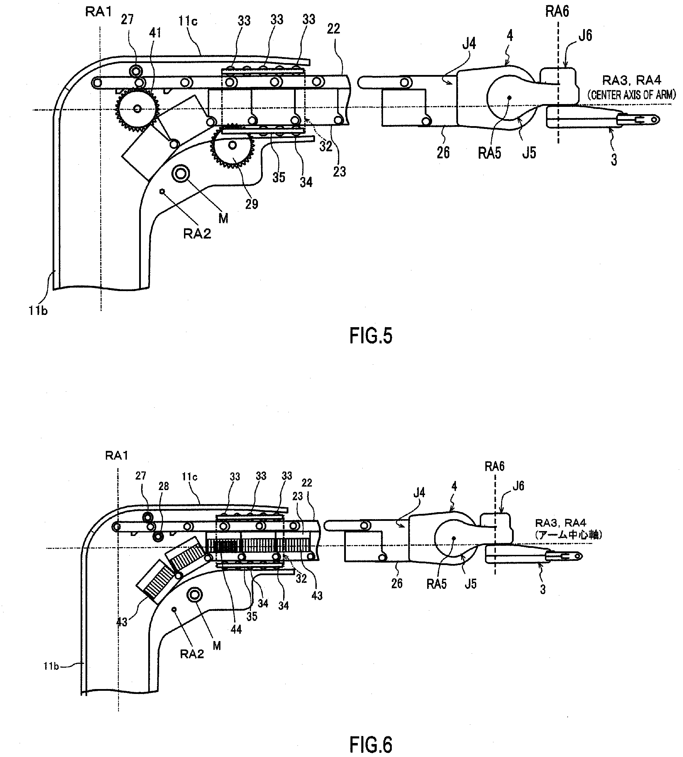

FIG. 5 illustrates an advanced example of the movement mechanism shown in FIG. 3. As described above, the first connection piece string 21 and the second connection piece string 20 are overlapped each other by the ejection section 32, forming the columnar body, and the drive gear 29 is engaged with the linear gears 30 at a position where the linear gears 30 are lined up forming a linear train. At the same time, if linear gears are formed on rear surfaces of the second connection pieces 22 and a drive gear 41 is engaged with the linear gears of the second connection pieces 22 at a position where the second connection piece string 20 is placed in a posture parallel to the center axis of the arm by the guide roller 27 behind the ejection section 32 where the first connection piece string 21 and the second connection piece string 20 are in a separated state, two systems of the rack-and-pinion mechanism can be provided making it possible to further improve movement characteristics of the linear extension and retraction mechanism.

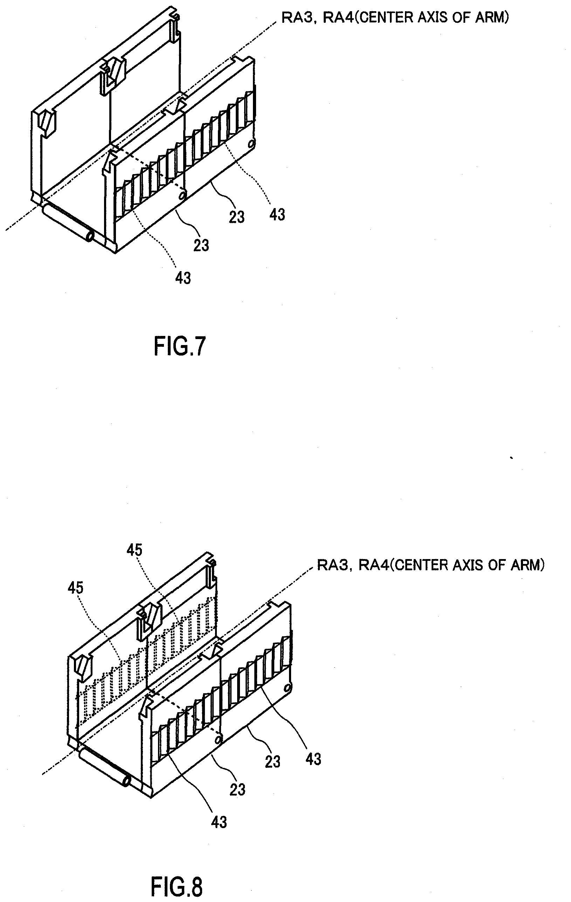

Whereas in the above description, the linear gear 30 is formed on the bottom plate of each first connection piece 23, a linear gear 43 may be formed on a side plate of each first connection piece 23 as shown in FIGS. 6 and 7. The linear gear 43 is formed in parallel to the center axis of the arm at a center of a front surface of the side plate of each first connection piece 23 in the width direction. When the first connection piece string 21 and the second connection piece string 20 are overlapped each other by the ejection section 32, forming the columnar body, the linear gears 43 are lined up forming a linear train. That portion at a rear end of a side plate of the ejection section 32 which corresponds to the linear gears 30 is notched at a center in the width direction and the drive gear 44 is inserted into the notched portion. The drive gear 44 is connected to a motor M via a speed reducer (not shown). The drive gear 44 is engaged with the linear gears 43 lined up forming a linear train. The drive gear 44 makes up a rack-and-pinion mechanism in conjunction with the linear gears 43.

As described above, the linear gear 43 is formed on the side plate of each first connection piece 23, the first connection piece string 21 and the second connection piece string 20 are overlapped each other by the ejection section 32, forming the columnar body, the drive gear 44 is placed at a position where the linear gears 43 are lined up forming a linear train, and the drive gear 44 is engaged with the linear gears 43 at this position in the ejection section 32, thereby making it possible to implement a rack-and-pinion mechanism as with the above example.

FIG. 8 illustrates an advanced example of the movement mechanism shown in FIG. 7. Linear gears 43 and 45 are formed on surfaces of opposite side-plates of each first connection piece 23. The linear gears 43 and 45 are formed at opposing center positions on the surfaces of the side plates of each first connection piece 23 in the width direction. These portions at rear ends of the opposite side-plates of the ejection section 32 which correspond to the linear gears 43 and 45 are notched at respective centers in the width direction and the drive gears with the same number of teeth are inserted into the notched portions. The pair of drive gears are connected, respectively, with a pair of speed reducers having the same speed reduction ratio. The speed reducers are connected with a single, common motor M. Along with rotation of the motor M, the pair of drive gears rotate at exactly the same angular velocity. With the first connection piece string 21 and the second connection piece string 20 being overlapped each other by the ejection section 32, forming the columnar body, the pair of drive gears are engaged with the linear gears 43 and 45 lined up forming linear trains. As the pair of drive gears rotate at the same angular velocity along with rotation of the motor M, the first connection piece string 21 moves at a constant speed together with the overlapped second connection piece string 20 by being driven on both sides.

In this example again, since two systems of the rack-and-pinion mechanism are provided, the movement characteristics of the linear extension and retraction mechanism can be improved. In addition, the pair of drive gears enable completely synchronized driving at opposed positions, making it possible to improve smoothness of movement. Furthermore, since the first connection piece string 21 is pressed from left and right by the pair of drive gears, side-to-side wobble of the columnar body formed by joining together the first connection piece string 21 and the second connection piece string 20 can be reduced effectively.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

### Reference Signs List

1...base, 2...arm section, 3...end effector, J1, J2, J4, J5, J6...rotary joint, J3...linear motion joint, 11a...first support body, 11b...second support body, 11c...third support body, 20...second connection piece string, 21...first connection piece string, 22...second connection piece, 23...first connection piece, 26...joining piece, 29...drive gear, 30...linear gear

## Claims

1. A robot arm mechanism comprising a revolute joint and a linear extension and retraction joint, wherein:
the linear extension and retraction joint includes
a plurality of first connection pieces coupled together bendably on a bottom plate side and provided with a U-shaped cross section;
a plurality of second connection pieces coupled together bendably and each shaped like a flat plate, a foremost one of the plurality of second connection pieces is connected with a foremost one of the plurality of first connection pieces, the first and second connection pieces forming a columnar body when overlapped each other, the columnar body being relaxed when the first connection pieces and the second connection pieces are separated from each other;
an ejection section adapted to form the columnar body by joining together the first and second connection pieces and support the columnar body; and
a movement section adapted to move the first and second connection pieces in an ejection direction;
wherein
a linear gear is formed on a surface of a bottom plate of each of the first connection pieces;
the movement section includes a drive gear engaged with the linear gears of the first connection pieces overlapped to the second connection pieces in the ejection section.

2. The robot arm mechanism according to claim 1, wherein:
another linear gear is provided on a back face of each of the second connection pieces; and
the movement section includes another drive gear engaged with the other linear gears of the second connection pieces separated from the first connection pieces outside the ejection section.

3. A robot arm mechanism comprising a revolute joint and a linear extension and retraction joint, wherein:
the linear extension and retraction joint includes
a plurality of first connection pieces coupled together bendably on a bottom plate side and provided with a U-shaped cross section;
a plurality of second connection pieces coupled together bendably and each shaped like a flat plate, a foremost one of the plurality of second connection pieces being connected with a foremost one of the plurality of first connection pieces, the first and second connection pieces forming a columnar body when overlapped each other, the columnar body being relaxed when the first connection pieces and the second connection pieces are separated from each other;
an ejection section adapted to form the columnar body by joining together the first and second connection pieces and support the columnar body, and
a movement section adapted to move the first and second connection pieces in an ejection direction;
wherein
a linear gear is formed on a lateral surface of each of the first connection pieces; and
the movement section includes a drive gear engaged with the linear gears of the first connection pieces overlapped to the second connection pieces in the ejection section.

4. A robot arm mechanism comprising a revolute joint and a linear extension and retraction joint, wherein:
the linear extension and retraction joint includes
a plurality of first connection pieces coupled together bendably on a bottom plate side and provided with a U-shaped cross section;
a plurality of second connection pieces coupled together bendably and each shaped like a flat plate, a foremost one of the plurality of second connection pieces being connected with a foremost one of the plurality of first connection pieces, the first and second connection pieces forming a columnar body when overlapped each other, the columnar body being relaxed when the first connection pieces and the second connection pieces are separated from each other;
an ejection section adapted to form the columnar body by joining together the first and second connection pieces and support the columnar body, and
a movement section adapted to move the first and second connection pieces in an ejection direction,
wherein
respective linear gears are formed on opposite lateral surfaces of each of the first connection pieces; and
the movement section includes a pair of drive gears engaged with the linear gears of the first connection pieces overlapped to the second connection pieces in the ejection section.

5. A linear extension and retraction mechanism comprising:
a plurality of first connection pieces coupled together bendably on a bottom plate side and provided with a U-shaped cross section;
a plurality of second connection pieces coupled together bendably and each shaped like a flat plate, a foremost one of the plurality of second connection pieces is connected with a foremost one of the plurality of first connection pieces, the first and second connection pieces, when overlapped each other, form a columnar body by being constrained from bending, the columnar body is relaxed when the first connection pieces and the second connection pieces are separated from each other;
an ejection section adapted to form the columnar body by joining together the first and second connection pieces and support the columnar body; and
a movement section adapted to move the first and second connection pieces in an ejection direction,
wherein
a linear gear is formed on a surface of a bottom plate of each of the first connection pieces, and
the movement section includes a drive gear engaged with the linear gears of the first connection pieces overlapped to the second connection pieces in the ejection section.

6. The linear extension and retraction mechanism according to claim 5, wherein:
another linear gear is provided on a back face of each of the second connection pieces; and
the movement section includes another drive gear engaged with the other linear gears of the second connection pieces separated from the first connection pieces outside the ejection section.

7. A linear extension and retraction mechanism comprising:
a plurality of first connection pieces coupled together bendably on a bottom plate side and provided with a U-shaped cross section;
a plurality of second connection pieces coupled together bendably and each shaped like a flat plate, wherein a foremost one of the plurality of second connection pieces being connected with a foremost one of the plurality of first connection pieces, the first and second connection pieces forming a columnar body when overlapped each other, the columnar body being relaxed when the first connection pieces and the second connection pieces are separated from each other;
an ejection section adapted to form the columnar body by joining together the first and second connection pieces and support the columnar body; and
a movement section adapted to move the first and second connection pieces in an ejection direction,
wherein
a linear gear is formed on a lateral surface of each of the first connection pieces, and
the movement section includes a drive gear engaged with the linear gears of the first connection pieces overlapped to the second connection pieces in the ejection section.

8. A linear extension and retraction mechanism comprising:
a plurality of first connection pieces coupled together bendably on a bottom plate side and provided with a U-shaped cross section;
a plurality of second connection pieces coupled together bendably and each shaped like a flat plate, a foremost one of the plurality of second connection pieces being connected with a foremost one of the plurality of first connection pieces, the first and second connection pieces forming a columnar body when overlapped each other, the columnar body being relaxed when the first connection pieces and the second connection pieces are separated from each other;
an ejection section adapted to form the columnar body by joining together the first and second connection pieces and support the columnar body; and
a movement section adapted to move the first and second connection pieces in an ejection direction,
wherein
respective linear gears are formed on opposite lateral surfaces of each of the first connection pieces, and
the movement section includes a pair of drive gears engaged with the linear gears of the first connection pieces overlapped to the second connection pieces in the ejection section.
